# EUROPEAN PATENT APPLICATION

(11) **EP 4 239 979 A1**
(43) Date of publication of application: **06.09.2023**
(21) Application number: 22214702.7
(22) Date of filing: 19.12.2022
(51) Int. Cl.: H04L 67/00, H04L 67/06, G06F 16/00

(54) **DATA DOWNLOAD METHOD AND APPARATUS, ELECTRONIC DEVICE, AND READABLE STORAGE MEDIUM**

(30) Priority: 02.03.2022 CN 202210199068
(71) Applicant: BEIJING BAIDU NETCOM SCIENCE AND TECHNOLOGY CO. LTD., 100085 Beijing (CN)
(72) Inventor: LIU, Mengbo, Beijing, 100085 (CN); FENG, Zhi, Beijing, 100085 (CN)
(74) Representative: dompatent von Kreisler Selting Werner - Partnerschaft von Patent- und Rechtsanwälten mbB

(57) **Abstract**

The present disclosure provides a data download method and apparatus, an electronic device, and a readable storage medium, and relates to the technical field of artificial intelligence such as cloud computing and big data. The data download method includes: receiving a data download request, the data download request including at least one data download task; judging whether the data download request is a new request, request content of which is different from that of a historical data download request; and acquiring a download result corresponding to the at least one data download task based on a judgment result. According to the present disclosure, a response to a data download request can be sped up, a waste of server resources is prevented, and data download efficiency is further improved.

## Description

### TECHNICAL FIELD

The present disclosure relates to the technical field of data processing, particularly to the technical field of artificial intelligence such as cloud computing and big data, and more particularly to a data download method and apparatus, an electronic device, and a readable storage medium.

### BACKGROUND

In a cloud computing environment, customers can enjoy the convenience of buying and using cloud resources at any time. However, with more and more accounts and resources, stable and efficient data downloads, such as downloads of billing data, are critical to the customers. Magnitude of billing data is positively correlated with a customer's resources and accounts. The more accounts in an organization to which the customer belongs and the more resources the accounts have, the greater the magnitude of the customer's billing data.

In the related art, when data such as bills is downloaded, responses to download requests are slow and same download tasks are repeatedly executed.

### SUMMARY

According to a first aspect of the present disclosure, a data download method is provided, including: receiving a data download request, the data download request including at least one data download task; judging whether the data download request is a new request, wherein request content of the new request is different from that of a historical data download request; and acquiring a download result corresponding to the at least one data download task based on a judgment result.

According to a second aspect of the present disclosure, a data download apparatus is provided, including: a receiving unit configured to receive a data download request, the data download request including at least one data download task; a judgment unit configured to judge whether the data download request is a new request, wherein request content of the new request is different from that of a historical data download request; and a processing unit configured to acquire a download result corresponding to the at least one data download task based on a judgment result.

According to a third aspect of the present disclosure, an electronic device is provided, including: at least one processor; and a memory in communication connection with the at least one processor; wherein the memory stores instructions executable by the at least one processor, and the instructions are executed by the at least one processor to enable the at least one processor to perform the method as described above.

According to a fourth aspect of the present disclosure, a non-transitory computer-readable storage medium storing computer instructions is provided, wherein the computer instructions are configured to cause a computer to perform the method as described above.

According to a fifth aspect of the present disclosure, a computer program product is provided, including a computer program, wherein, when the computer program is executed by a processor, the method as described above is performed.

As can be seen from the above technical solutions, according to the present disclosure, a download result corresponding to at least one data download task is acquired according to a judgment result of whether the data download request is a new request, which prevents a waste of server resources and further improves download efficiency in data downloads.

It should be understood that the content described in this part is neither intended to identify key or significant features of the embodiments of the present disclosure, nor intended to limit the scope of the present disclosure. Other features of the present disclosure will be made easier to understand through the following description.

### BRIEF DESCRIPTION OF THE DRAWINGS

The accompanying drawings are intended to provide a better understanding of the solutions and do not constitute a limitation on the present disclosure. In the drawings,
FIG. 1 is a schematic diagram according to a first embodiment of the present disclosure;
FIG. 2 is a schematic diagram according to a second embodiment of the present disclosure;
FIG. 3 is a schematic diagram according to a third embodiment of the present disclosure;
FIG. 4 is a schematic diagram according to a fourth embodiment of the present disclosure; and
FIG. 5 is a block diagram of an electronic device configured to implement a data download method according to an embodiment of the present disclosure.

### DETAILED DESCRIPTION OF EMBODIMENTS

Exemplary embodiments of the present disclosure are illustrated below with reference to the accompanying drawings, which include various details of the present disclosure to facilitate understanding and should be considered only as exemplary. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

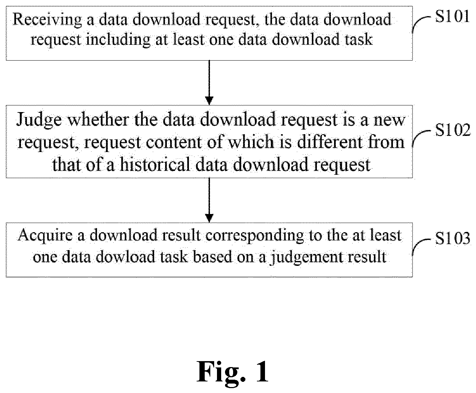

FIG. 1 is a schematic diagram according to a first embodiment of the present disclosure. As shown in FIG. 1, a data download method according to this embodiment specifically includes the following steps.

In S101, a data download request is received, the data download request including at least one data download task.

In S102, it is judged whether the data download request is a new request, where request content of the new request is different from that of a historical data download request.

In S103, a download result corresponding to the at least one data download task is acquired based on a judgment result.

The data download method according to this embodiment is performed by a server. The server acquires a download result corresponding to at least one data download task according to a judgment result of whether the data download request is a new request, which prevents a waste of server resources and further improves download efficiency in data downloads.

The data download request received by performing S101 by the server in this embodiment, in addition to including at least one data download task, further includes download parameters of data download tasks. Downloaded data corresponding to the data download request received by performing S101 by the server in this embodiment may be different types of data such as bills and multimedia resources.

The download parameters included in the data download request received by performing S101 by the server in this embodiment may correspond to different data types. If the downloaded data corresponding to the data download request is a bill, the download parameters may include a bill type, a time range, a region, a resource name, a resource type, and the like. If the downloaded data corresponding to the data download request is a multimedia resource, the download parameters may include a TV series with multiple episodes, the download parameters may include a name and a number of episodes of the TV series.

It may be understood that one or more servers may be provided in this embodiment. That is, the server performing the data download method in this embodiment may be a single server, or a distributed server including a plurality of subservers. Each subserver in the distributed server can receive a data download request sent by an input terminal.

After performing S101 to receive a data download request including at least one data download task, the server in this embodiment performs S 102 to judge whether the data download request is a new request. In this embodiment, request content of the new request is different from that of a historical data download request.

That is, after receiving the data download request, the server in this embodiment may not immediately execute the at least one data download task included in the download request, but simply receives the request, and thus can return a submission result of the request to the input terminal in milliseconds.

The server in this embodiment may record the received data download requests. Each data download request corresponds to different request content. Therefore, the server in this embodiment can determine whether the data download request is a new request according to a judgment result of whether the request content is the same.

In actual scenarios, repeated data download requests may be sent due to repeated clicks on the input terminal, or different employees of a same company may download same data. Therefore, the server is required to de-duplicate the received data download requests to ensure that no repeated data download requests are executed to prevent a waste of computing resources of the server.

Specifically, when the server in this embodiment performs S102 to judge whether the data download request is a new request, an available optional implementation involves: acquiring a request identifier of the data download request, where the request identifier in this embodiment may be a request number consisting of identifier information of the input terminal and the time when the input terminal sends the data download request, and the identifier information of the input terminal may be a number of a company or a number of an employee; and in response to determining that no historical request identifier the same as the request identifier exists, determining that the data download request is the new request.

In addition, when the server in this embodiment performs S102, the following content may also be included: in response to determining that a historical request identifier the same as the request identifier exists, acquiring a historical data download request corresponding to the historical request identifier the same as the request identifier as a first target historical data download request; and in response to determining that download parameters of the data download request are different from those of the first target historical data download request, determining that the data download request is the new request, and otherwise, determining that the data download request is not a new request.

That is, the server in this embodiment can achieve a purpose of request de-duplication according to the request identifier corresponding to the data download request, which can be applied to two scenarios of network timeout of the input terminal and repeated transmission of the input terminal, so as to easily determine whether the data download request is a new request.

When the server in this embodiment performs S102 to judge whether the data download request is a new request, an available optional implementation involves: generating a target hash value according to download parameters of the data download request; and in response to determining that no historical hash value the same as the target hash value exists, determining that the data download request is the new request, wherein the historical hash value is a hash value generated based on download parameters of a historical data download request.

In addition, when the server in this embodiment performs S102, the following content may also be included: in response to determining that a historical hash value the same as the target hash value exists, acquiring a historical data download request corresponding to the historical hash value the same as the target hash value as a second target historical data download request; and in response to determining that the download parameters of the data download request are different from those of the second target historical data download request, determining that the data download request is a new request, and otherwise, determining that the data download request is not a new request.

That is, in this embodiment, a purpose of request de-duplication is achieved by generating hash values corresponding to the download parameters, which can be applied to richer scenarios and has higher de-duplication accuracy compared with the request de-duplication through the request ID.

When performing S102 to generate a target hash value according to download parameters of the data download request, the server in this embodiment may generate, according to different fields of download parameters, hash values of the different fields, splice the hash values of the different fields, and take a splicing result as the target hash value.

After performing S102 to judge whether the data download request is a new request, the server in this embodiment performs S103 to acquire a download result corresponding to the at least one data download task based on a judgment result.

That is, the server in this embodiment can acquire the download result corresponding to the at least one data download task according to different judgment results and by using an acquisition manner corresponding to the obtained judgment result. In this embodiment, the download result corresponding to the at least one data download task included in the data download request may be acquired as a download result corresponding to the data download request.

When the server in this embodiment performs S103 to acquire a download result corresponding to the at least one data download task based on a judgment result, an available optional implementation involves: adding the at least one data download task to a task pool when the data download request is a new request; and acquiring a data download task from the task pool, and executing the acquired data download task to obtain a download result corresponding to the acquired data download task.

That is, when judging that the data download request is a new request, the server in this embodiment can add the at least one data download task included in the data download request to the task pool for a single server or sub-servers in a distributed server to acquire data download tasks from the task pool.

In addition, if the server in this embodiment performs S103 to judge that the data download request is a new request, it may be considered that the data download request has been completed before, and a download result of a historical data download request having the same request content is directly acquired as a download result corresponding to the data download request, thereby preventing the problem that repeated requests are executed multiple times and preventing a waste of computing resources of the server.

When the server in this embodiment performs S103 to acquire a data download task from the task pool, an available optional implementation involves: acquiring its own load condition; and acquiring the data download task from the task pool in response to determining that its own load condition meets a preset requirement.

Specifically, when the server in this embodiment performs S103 to determine that the load condition meets a preset requirement, an available optional implementation involves: determining that the load condition meets the preset requirement in response to determining that memory is still available and a number of data download tasks currently executed does not exceed a total number of threads supported.

That is, the server in this embodiment may dynamically judge its own load to prevent server crashes caused by acquisition and execution of excessive data download tasks, thereby ensuring stability of the server in the execution of the data download tasks.

It may be understood that, when the server in this embodiment is a distributed server, a subserver that receives a data download request and a subserver that executes a data download task included in the data download request may be different subservers, which thus achieves a purpose of distributing a plurality of data download tasks included in a same data download request to different subservers, thereby further improving the stability of the server in the execution of the data download request.

When the server in this embodiment performs S103 to acquire a data download task from the task pool, an available optional implementation involves: determining waiting time of data download tasks in the task pool; and acquiring the data download tasks from the task pool sequentially in descending order of the waiting time.

That is, when acquiring a data download task from the task pool, the server in this embodiment may acquire the data download tasks in descending order of the waiting time based on the waiting time of the data download tasks in the task pool, so that a data download task with longer waiting time is preferentially acquired from the task pool and the data download tasks added to the task pool are executed in an orderly manner.

After the server in this embodiment performs S103 to acquire a data download task from the task pool, the following content may also be included: acquiring a server number; and setting the acquired data download task to a locked state by using the server number, to enable the data download task to be executed only by a server corresponding to the server number.

That is, the server in this embodiment sets the acquired data download task to the locked state by locking the data download task acquired from the task pool to prevent simultaneous acquisition and execution of a same data download task by different servers, so that the data download task can be executed only by a server corresponding to the server number used during the locking.

The server number of the server acquired by performing S 103 in this embodiment may be a number specified for the server in advance, or an IP address of the server may be acquired as the server number.

When the server in this embodiment performs S103 to execute the acquired data download task to obtain a download result, an available optional implementation involves: determining download parameters of the acquired data download task; sending the determined download parameters to a data center, and receiving a data download result returned by the data center; and taking the received data download result as a download result of the data download task.

It may be understood that, if the server in this embodiment fails to receive the data download result returned by the data center after performing S 103 to send the determined download parameters to the data center, the server can send the determined download parameters to the data center again until the number of times the sever fails to receive the data download result returned by the data center reaches a preset number of times, and the data download task is terminated.

That is, when the server in this embodiment executes the data download task, a task retry mechanism may also be provided to solve the problem of failure of execution of the data download task when the sever cannot be connected to the data center, and the performance of the server during the execution of the data download task is improved accordingly.

In addition, when the server in this embodiment performs S103 to determine termination of the data download task, in addition to a case that the number of retries reaches a preset number, the data download task can be directly terminated according to an acquired manual intervention signal to prevent meaningless attempts.

Since the server may be upgraded or online on a daily basis. If a data download task is being executed when the server is upgraded or online, the upgrade or online process of the server may not be continued and subsequent data downloads may be interrupted. As a result, the data download task fails.

Therefore, when the server in this embodiment performs S103 to execute the acquired data download task, an available optional implementation involves: checking at a preset time interval whether an interrupt signal exists, the acquired interrupt signal being a signal delivered by the server and used to interrupt the data download task; and interrupting the data download task in response to determining that the interrupt signal exists.

That is, the server in this embodiment may periodically check whether an interrupt signal exists and interrupt the data download task in response to determining that the interrupt signal exists, so as to prevent failure of the data download task.

In addition, content of displaying downloaded data may also be involved during data downloads. Therefore, the server in this embodiment may display and download the downloaded data by specifying an interface format.

When the server in this embodiment performs S103 to receive a data download result returned by the data center, a data download result corresponding to the download parameters may also be acquired from the data center by specifying a path of a data source and a title of a file in advance. The server can achieve a purpose of unified development for display and download by specifying the path of the data source and the title of the file.

After performing S103 to execute the acquired data download task to obtain a download result, the server in this embodiment may directly return the download result corresponding to the data download task to the input terminal; or obtain a download result corresponding to the data download request according to the download result of the at least one data download task, and then return the download result of the data download request to the input terminal.

When the server in this embodiment performs S 103 to obtain a download result corresponding to the data download request according to the download result of the at least one data download task, an available optional implementation involves: acquiring a data size of the download result of the at least one data download task; compressing the download result of the at least one data download task in response to determining that the acquired data size exceeds a preset threshold; and taking a compression result as the download result corresponding to the data download request.

That is, when obtaining the download result corresponding to the data download request, the server in this embodiment can perform data compression according to data sizes of download results of all data download tasks, which reduces occupation of a storage space and bandwidth usage and facilitates the input terminal to download.

After the server in this embodiment performs S103 to obtain a download result corresponding to the data download request, the following content may also be included: acquiring attribute information of the download result corresponding to the data download request, for example, a data size of the download result and a type of the download result; determining a storage manner corresponding to the acquired attribute information, where the storage manner may be sending an email or sending an SMS for local storage to the input terminal or storage to the cloud; and storing the download result corresponding to the data download request by using the determined storage manner.

That is, the server in this embodiment may also automatically select a storage manner according to the attribute information of the download result of the data download request, which further improves intelligence of data downloads.

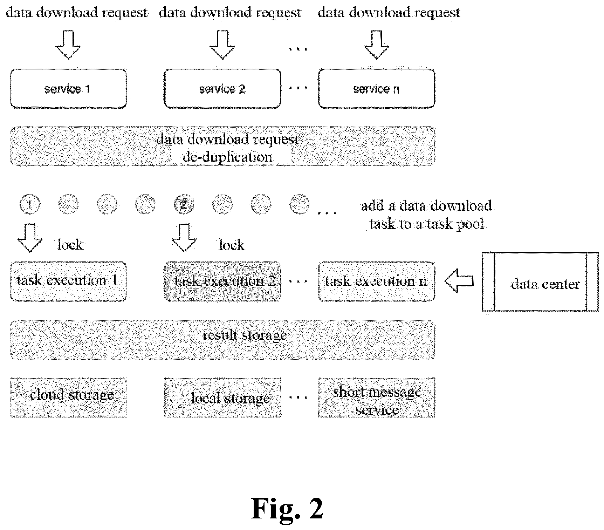

FIG. 2 is a schematic diagram according to a second embodiment of the present disclosure. FIG. 2 is a flowchart of a data download according to this embodiment. The server in this embodiment is a distributed server. Different subservers (service 1 to service n) receive different data download requests. The data download requests are de-duplicated, and the data download requests belonging to new requests are stored. Different subservers acquire data download tasks from a task pool, lock the data download tasks, and cooperate with a data center to execute different data download tasks. Obtained download results of the data download tasks are stored, for example, to the cloud or locally.

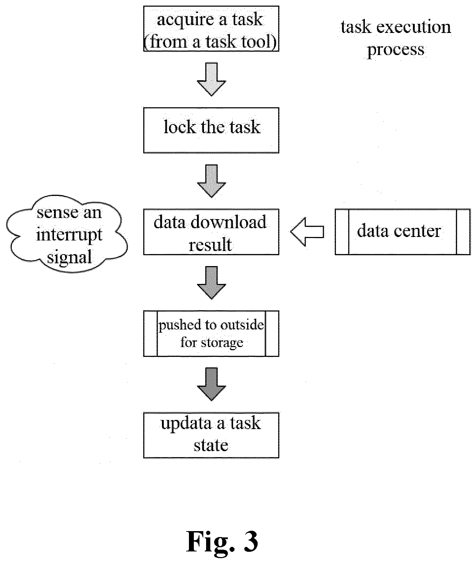

FIG. 3 is a schematic diagram according to a third embodiment of the present disclosure. FIG. 3 is a flowchart of execution of a data download task by a server according to this embodiment, including: acquiring a data download task from a task pool; locking the acquired data download task, and acquiring a corresponding data download result through a data center; and sending the acquired data download result to the outside for storage, and updating a task state of the data download task. In addition, the server may also sense an interrupt signal when acquiring a same data download result through the data center, so as to interrupt the data download task in a timely manner.

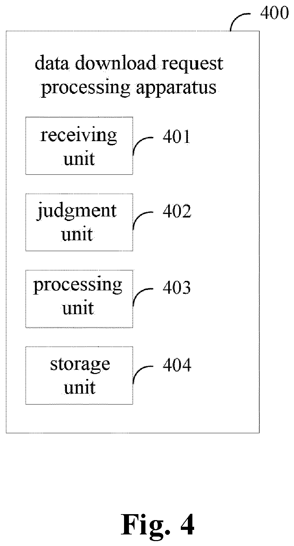

FIG. 4 is a schematic diagram according to a fourth embodiment of the present disclosure. As shown in FIG. 4, a data apparatus 400 in this embodiment is located on a server, including:
a receiving unit 401 configured to receive a data download request, the data download request including at least one data download task;
a judgment unit 402 configured to judge whether the data download request is a new request, wherein request content of the new request is different from that of a historical data download request; and
a processing unit 403 configured to acquire a download result corresponding to the at least one data download task based on a judgment result.

The data download request received by the receiving unit 401 further includes download parameters of data download tasks in addition to including at least one data download task. Downloaded data corresponding to the data download request received by the receiving unit 401 may be different types of data such as bills and multimedia resources.

The download parameters included in the data download request received by the receiving unit 401 may correspond to different data types. If the downloaded data corresponding to the data download request is a bill, the download parameters may include a bill type, a time range, a region, a resource name, a resource type, and the like. If the downloaded data corresponding to the data download request is a multimedia resource, the download parameters may include a TV series with multiple episodes, the download parameters may include a name and a number of episodes of the TV series.

It may be understood that one or more servers may be provided in this embodiment. That is, the data download apparatus in this embodiment may be a single server, or a distributed server including a plurality of subservers. Each subserver in the distributed server can receive a data download request sent by an input terminal.

In this embodiment, after the receiving unit 401 receives the data download request including at least one data download task, the judgment unit 402 judges whether the data download request is a new request. In this embodiment, request content of the new request is different from that of a historical data download request.

That is, in this embodiment, after receiving the data download request, the server may not immediately execute the at least one data download task included in the download request, but simply receives the request, and thus can return a submission result of the request to the input terminal in milliseconds.

Specifically, when the judgment unit 402 judges whether the data download request is a new request, an available optional implementation involves: acquiring a request identifier of the data download request; and in response to determining that no historical request identifier the same as the request identifier exists, determining that the data download request is a new request.

The judgment unit 402 is further configured to: in response to determining that a historical request identifier the same as the request identifier exists, acquire a historical data download request corresponding to the historical request identifier the same as the request identifier as a first target historical data download request; and in response to determining that download parameters of the data download request are different from those of the first target historical data download request, determine that the data download request is a new request, and otherwise, determine that the data download request is not a new request.

That is, the judgment unit 402 can achieve a purpose of request de-duplication according to the request identifier corresponding to the data download request, which can be applied to two scenarios of network timeout of the input terminal and repeated transmission of the input terminal, so as to easily determine whether the data download request is a new request.

When the judgment unit 402 judges whether the data download request is a new request, an available optional implementation involves: generating a target hash value according to download parameters of the data download request; and in response to determining that no historical hash value the same as the target hash value exists, determining that the data download request is a new request, wherein the historical hash value is a hash value generated based on download parameters of a historical data download request.

In addition, the judgment unit 402 is further configured to: in response to determining that a historical hash value the same as the target hash value exists, acquire a historical data download request corresponding to the historical hash value the same as the target hash value as a second target historical data download request; and in response to determining that the download parameters of the data download request are different from those of the second target historical data download request, determine that the data download request is a new request, and otherwise, determine that the data download request is not a new request.

That is, the judgment unit 402 achieves a purpose of request de-duplication by generating hash values corresponding to the download parameters, which can be applied to richer scenarios and has higher de-duplication accuracy compared with the request de-duplication through the request ID.

When generating a target hash value according to download parameters of the data download request, the judgment unit 402 may generate, according to different fields of download parameters, hash values of the different fields, splice the hash values of the different fields, and take a splicing result as the target hash value.

According to the server in this embodiment, after the judgment unit 402 judges whether the data download request is a new request, the processing unit 403 acquires a download result corresponding to the at least one data download task based on a judgment result.

That is, the server in this embodiment can acquire the download result corresponding to the at least one data download task according to different judgment results and by using an acquisition manner corresponding to the obtained judgment result. In this embodiment, the download result corresponding to the at least one data download task included in the data download request may be acquired as a download result corresponding to the data download request.

When the processing unit 403 acquires a download result corresponding to the at least one data download task based on a judgment result, an available optional implementation involves: adding the at least one data download task to a task pool when the data download request is a new request; and acquiring a data download task from the task pool, and executing the acquired data download task to obtain a download result corresponding to the acquired data download task.

That is, when judging that the data download request is a new request, the server in this embodiment can add the at least one data download task included in the data download request to the task pool for a single server or sub-servers in a distributed server to acquire data download tasks from the task pool.

In addition, if the processing unit 403 judges that the data download request is a new request, it may be considered that the data download request has been completed before, and a download result of a historical data download request having the same request content is directly acquired as a download result corresponding to the data download request, thereby preventing the problem that repeated requests are executed multiple times and preventing a waste of computing resources of the server.

When the processing unit 403 acquires a data download task from the task pool, an available optional implementation involves: acquiring its own load condition; and acquiring the data download task from the task pool in response to determining that the load condition meets a preset requirement.

Specifically, when the processing unit 403 determines that the load condition meets a preset requirement, an available optional implementation involves: determining that the load condition meets the preset requirement in response to determining that memory is still available and a number of data download tasks currently executed does not exceed a total number of threads supported.

That is, the server in this embodiment may dynamically judge its load condition through the processing unit 403 to prevent server crashes caused by acquisition and execution of excessive data download tasks, thereby ensuring stability of the server in the execution of the data download tasks.

It may be understood that, when the server in this embodiment is a distributed server, a subserver that receives a data download request and a subserver that executes a data download task included in the data download request may be different subservers, which thus achieves a purpose of distributing a plurality of data download tasks included in a same data download request to different subservers, thereby further improving the stability of the server in the execution of the data download request.

When the processing unit 403 acquires a data download task from the task pool, an available optional implementation involves: determining waiting time of data download tasks in the task pool; and acquiring the data download tasks from the task pool sequentially in descending order of the waiting time.

That is, when acquiring a data download task from the task pool, the server in this embodiment may acquire the data download tasks in descending order of the waiting time based on the waiting time of the data download tasks in the task pool, so that a data download task with longer waiting time is preferentially acquired from the task pool and the data download tasks added to the task pool are executed in an orderly manner.

After the processing unit 403 acquires a data download task from the task pool, the following content may also be included: acquiring a server number; and setting the acquired data download task to a locked state by using the server number, to enable the data download task to be executed only by a server corresponding to the server number.

That is, the server in this embodiment sets the acquired data download task to the locked state by locking the data download task acquired from the task pool to prevent simultaneous acquisition and execution of a same data download task by different servers, so that the data download task can be executed only by a server corresponding to the server number used during the locking.

The server number of the server acquired by the processing unit 403 may be a number specified for the server in advance, or an IP address of the serve may be acquired as the server number.

When the server in this embodiment executes the acquired data download task through the processing unit 403 to obtain a download result, an available optional implementation involves: determining download parameters of the acquired data download task; sending the determined download parameters to a data center, and receiving a data download result returned by the data center; and taking the received data download result as a download result of the data download task.

It may be understood that, if the processing unit 403 fails to receive the data download result returned by the data center after sending the determined download parameters to the data center, the server can send the determined download parameters to the data center again until the number of times the sever fails to receive the data download result returned by the data center reaches a preset number of times, and the data download task is terminated.

That is, when the server in this embodiment executes the data download task, a task retry mechanism may also be provided to solve the problem of failure of execution of the data download task when the sever cannot be connected to the data center, and the performance of the server during the execution of the data download task is improved accordingly.

In addition, when the processing unit 403 determines termination of the data download task, in addition to a case that the number of retries reaches a preset number, the data download task can be directly terminated according to an acquired manual intervention signal to prevent meaningless attempts.

Since the server may be upgraded or online on a daily basis. If a data download task is being executed when the server is upgraded or online, the upgrade or online process of the server may not be continued and subsequent data downloads may be interrupted. As a result, the data download task fails.

Therefore, when the processing unit 403 executes the acquired data download task, an available optional implementation involves: checking at a preset time interval whether an interrupt signal exists; and interrupting the data download task in response to determining that the interrupt signal exists.

That is, the server in this embodiment may periodically check whether an interrupt signal exists and interrupt the data download task in response to determining that the interrupt signal exists, so as to prevent failure of the data download task.

In addition, content of displaying downloaded data may also be involved during data downloads. Therefore, the server in this embodiment may display and download the downloaded data by specifying an interface format.

When the processing unit 403 receives a data download result returned by the data center, a data download result corresponding to the download parameters may also be acquired from the data center by specifying a path of a data source and a title of a file in advance. The server can achieve a purpose of unified development for display and download by specifying the path of the data source and the title of the file.

In this embodiment, after executing the acquired data download task to obtain a download result, the processing unit 403 may directly return the download result corresponding to the data download task to the input terminal; or obtain a download result corresponding to the data download request according to the download result of the at least one data download task, and then return the download result of the data download request to the input terminal.

When the processing unit 403 obtains a download result corresponding to the data download request according to the download result of the at least one data download task, an available optional implementation involves: acquiring a data size of the download result of the at least one data download task; compressing the download result of the at least one data download task in response to determining that the acquired data size exceeds a preset threshold; and taking a compression result as the download result corresponding to the data download request.

That is, when obtaining the download result corresponding to the data download request, the server in this embodiment can perform data compression according to data sizes of download results of all data download tasks, which reduces occupation of a storage space and bandwidth usage and facilitates the input terminal to download.

In this embodiment, the data download apparatus 400 located in the server may further include a storage unit 404 configured to, after the processing unit 403 obtains a download result corresponding to the data download request, acquire attribute information of the download result corresponding to the data download request; determine a storage manner corresponding to the acquired attribute information; and store the download result corresponding to the data download request by using the determined storage manner.

That is, the server in this embodiment may also automatically select a storage manner according to the attribute information of the download result corresponding to the data download request, which further improves intelligence of data downloads.

Acquisition, storage, and application of users' personal information involved in the technical solutions of the present disclosure comply with relevant laws and regulations, and do not violate public order and moral.

According to embodiments of the present disclosure, the present disclosure further provides an electronic device, a readable storage medium, and a computer program product.

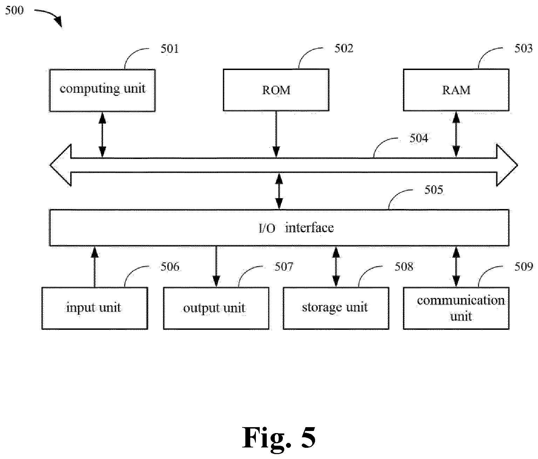

FIG. 5 is a block diagram of an electronic device configured to implement a data download method according to an embodiment of the present disclosure. The electronic device is intended to represent various forms of digital computers, such as laptops, desktops, workbenches, personal digital assistants, servers, blade servers, mainframe computers and other suitable computers. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

As shown in FIG. 5, the device 500 includes a computing unit 501, which may perform various suitable actions and processing according to a computer program stored in a read-only memory (ROM) 502 or a computer program loaded from a storage unit 508 into a random access memory (RAM) 503. The RAM 503 may also store various programs and data required to operate the device 500. The computing unit 501, the ROM 502 and the RAM 503 are connected to one another by a bus 504. An input/output (I/O) interface 505 is also connected to the bus 504.

A plurality of components in the device 500 are connected to the I/O interface 505, including an input unit 506, such as a keyboard and a mouse; an output unit 507, such as various displays and speakers; a storage unit 508, such as disks and discs; and a communication unit 509, such as a network card, a modem and a wireless communication transceiver. The communication unit 509 allows the device 500 to exchange information/data with other devices over computer networks such as the Internet and/or various telecommunications networks.

The computing unit 501 may be a variety of general-purpose and/or special-purpose processing components with processing and computing capabilities. Some examples of the computing unit 501 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 501 performs the methods and processing described above, such as the data download method. For example, in some embodiments, the data download method may be implemented as a computer software program that is tangibly embodied in a machine-readable medium, such as the storage unit 508.

In some embodiments, part or all of a computer program may be loaded and/or installed on the device 500 via the ROM 502 and/or the communication unit 509. One or more steps of the data download method described above may be performed when the computer program is loaded into the RAM 503 and executed by the computing unit 501. Alternatively, in other embodiments, the computing unit 501 may be configured to perform the data download method by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and instructions from a storage system, at least one input apparatus, and at least one output apparatus, and to transmit data and instructions to the storage system, the at least one input apparatus, and the at least one output apparatus.

Program codes configured to implement the methods in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, an RAM, an ROM, an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, speech input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN), and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, also known as a cloud computing server or cloud host, which is a host product in the cloud computing service system to solve the problems of difficult management and weak business scalability in the traditional physical host and a Virtual Private Server (VPS). The server may be a cloud server, a distributed system server, or a server combined with blockchain.

It should be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the protection scope of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the protection scope of the present disclosure.

## Claims

1. A data download method, **characterized by** comprising:
receiving (S101) a data download request, the data download request comprising at least one data download task;
judging (S102) whether the data download request is a new request, wherein request content of the new request is different from that of a historical data download request; and
acquiring (S103) a download result corresponding to the at least one data download task based on a judgment result.

2. The method of claim 1, wherein the judging whether the data download request is the new request comprises:
acquiring a request identifier of the data download request; and
in response to determining that no historical request identifier the same as the request identifier exists, determining that the data download request is the new request.

3. The method of claim 2, further comprising:
in response to determining that a historical request identifier the same as the request identifier exists, acquiring a historical data download request corresponding to the historical request identifier the same as the request identifier as a first target historical data download request; and
in response to determining that download parameters of the data download request are different from those of the first target historical data download request, determining that the data download request is the new request.

4. The method of claim 1, wherein the judging whether the data download request is the new request comprises:
generating a target hash value according to download parameters of the data download request; and
in response to determining that no historical hash value the same as the target hash value exists, determining that the data download request is the new request, wherein the historical hash value is a hash value generated based on download parameters of a historical data download request.

5. The method of claim 4, further comprising:
in response to determining that a historical hash value the same as the target hash value exists, acquiring a historical data download request corresponding to the historical hash value the same as the target hash value as a second target historical data download request; and
in response to determining that the download parameters of the data download request are different from download parameters of the second target historical data download request, determining that the data download request is a new request.

6. The method of any one of claims 1 to 5, wherein the acquiring the download result corresponding to the at least one data download task based on the judgment result comprises:
adding the at least one data download task to a task pool when the data download request is the new request; and
acquiring a data download task from the task pool, and executing the acquired data download task to obtain the download result.

7. The method of claim 6, wherein the acquiring the data download task from the task pool comprises:
acquiring a load condition; and
acquiring the data download task from the task pool in response to determining that the load condition meets a preset requirement.

8. The method of claim 6 or 7, wherein the acquiring the data download task from the task pool comprises:
determining waiting time of data download tasks in the task pool; and
acquiring the data download tasks from the task pool sequentially in descending order of the waiting time.

9. The method of any one of claims 6 to 8, further comprising:
acquiring a server number after acquiring the data download task from the task pool; and
setting the acquired data download task to a locked state by using the server number, to enable the data download task to be executed only by a server corresponding to the server number.

10. The method of any one of claims 1 to 9, further comprising:
acquiring a download result of a historical data download request having the same request content as the data download request as a download result corresponding to the data download request, when the data download request is not the new request.

11. A data download apparatus (400), **characterized by** comprising:
a receiving unit (401) configured to receive (S101) a data download request, the data download request comprising at least one data download task;
a judgment unit (402) configured to judge (S102) whether the data download request is a new request, wherein request content of the new request is different from that of a historical data download request; and
a processing unit (403) configured to acquire (S103) a download result corresponding to the at least one data download task based on a judgment result.

12. The apparatus of claim 11, wherein, when judging whether the data download request is a new request, the judgment unit is specifically configured to:
acquire a request identifier of the data download request; and
in response to determining that no historical request identifier the same as the request identifier exists, determine that the data download request is the new request.

13. An electronic device, comprising:
at least one processor; and
a memory in communication connection with the at least one processor; wherein
the memory stores instructions executable by the at least one processor, and the instructions are executed by the at least one processor to enable the at least one processor to perform the method of any one of claims 1 to 10.

14. A non-transitory computer-readable storage medium storing computer instructions, wherein the computer instructions are configured to cause a computer to perform the method of any one of claims 1 to 10.

15. A computer program product, comprising a computer program, wherein, when the computer program is executed by a processor, the method of any one of claims 1 to 10 is performed.
